Europäisches Patentamt

European Patent Office

Office européen des brevets

(19)

(11) **EP 1 054 327 A1**

## (12) DEMANDE DE BREVET EUROPEEN

(43) Date de publication:
**22.11.2000 Bulletin 2000/47**

(51) Int Cl.$^7$: **G06F 11/10**

(21) Numéro de dépôt: **00401312.4**

(22) Date de dépôt: **15.05.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **17.05.1999 FR 9906200**

(71) Demandeur: **ALCATEL**
**75008 Paris (FR)**

(72) Inventeur: **Menard, Olivier**
**31100 Toulouse (FR)**

(74) Mandataire: **Smith, Bradford Lee et al**
**COMPAGNIE FINANCIERE ALCATEL**
**Dépt. Propr. Industrielle,**
**30, avenue Kléber**
**75116 Paris (FR)**

### (54) Dispositif de détection d'erreur dans une mémoire associée à un processeur

(57)  L'invention concerne un ensemble, par exemple embarqué à bord d'un satellite, comprenant un processeur (10) et un dispositif de protection (14) qui, pour chaque mot de données transféré du processeur (10) vers une mémoire (12), calcule un mot de contrôle qui est mémorisé (12a) et qui, lors du transfert du mot de données de la mémoire vers le processeur, recalcule un mot de contrôle et compare (32) ce mot recalculé au mot de contrôle mémorisé de façon à détecter et corriger des erreurs simples ou multiples.

Le dispositif (14) de protection comporte, en outre, un organe (44) effectuant une détection d'erreur dont le temps de traitement est inférieur au temps de détection et de détermination d'erreur. Si l'organe (44) ne détecte pas d'erreur, il autorise le transfert du mot de données vers le processeur.

FIG. 2

EP 1 054 327 A1

## Description

L'invention est relative à un ensemble comprenant un processeur, une mémoire et un dispositif de détection et correction d'erreur(s) des données transférées de la mémoire vers le processeur, la mémoire étant interne ou externe au processeur ou calculateur.

Dans ce qui suit, on se référa principalement à un calculateur destiné à être embarqué dans un engin spatial, tel qu'un satellite, dans lequel on prévoit une mémoire vive externe au calculateur. Toutefois, l'invention n'est ni limitée aux applications spatiales ni limitée au fait que la mémoire soit externe au calculateur.

Les mémoires embarquées dans des engins spatiaux sont soumises à des particules qui peuvent modifier l'état d'un ou plusieurs bit(s) stocké(s) dans une mémoire vive ou volatile (RAM). Ces modifications d'état risquent d'entraîner des conséquences néfastes sur les données traitées par le calculateur. C'est pourquoi, les calculateurs embarqués sont, en général, associés à un dispositif de détection et correction d'erreur (s). Ces dispositifs font appel à des codes correcteurs d'erreur tels que des codes cycliques ou codes de Hamming permettant de détecter et de corriger une erreur sur un bit dans un mot de, par exemple, 16, 32 ou 64 bits et de détecter, sans corriger, les erreurs portant sur deux bits d'un mot. Une erreur sur un seul bit est dite "erreur simple" et une erreur portant sur deux bits est dite "erreur double".

Il n'est habituellement pas nécessaire de détecter trois erreurs ou plus dans un mot car la probabilité d'apparition d'un tel défaut est pratiquement nulle. Il n'est pas non plus indispensable de corriger les erreurs doubles car celles-ci sont très rares. Pour éliminer ces erreurs doubles, on effectue, en général, une remise à zéro (reset) de la tâche que le calculateur est en train d'effectuer.

Le code correcteur d'erreur se présente sous la forme d'un mot de contrôle ayant un nombre de bits sensiblement inférieur au nombre de bits du mot à vérifier. Par exemple, un mot de contrôle de 8 bits est suffisant pour caractériser un mot de 32 à 64 bits.

Un dispositif de détection et correction d'erreur comprend donc une mémoire vive dans laquelle est stocké le mot de contrôle lorsque le mot concerné est transféré du processeur vers la mémoire vive. Lorsqu'on lit les données se trouvant dans la mémoire vive afin de les réintroduire dans le processeur, le dispositif de détection et de correction calcule de nouveau le mot de contrôle et le compare au mot de contrôle préalablement stocké. Cette comparaison permet de déterminer si le mot stocké en mémoire principale présente ou non une erreur et, s'il présente une erreur, si le nombre de bits inexact est de 1 ou de 2. Dans le cas où un seul bit du mot principal est erroné, la comparaison permet d'indiquer l'emplacement du bit erroné et donc de le corriger.

Dans les montages les plus récents, les données sont transférées directement de la mémoire vers le processeur, le dispositif de détection et de correction d'erreurs étant alors disposé en dérivation de la connexion de la mémoire au processeur. Bien que cette architecture permette un transfert des données de la mémoire vers le processeur qui soit plus rapide que dans le cas où les données doivent traverser le dispositif, il reste cependant un temps d'attente car les données ne sont introduites dans le processeur qu'après la fin de l'opération de détection d'erreur et, éventuellement, de correction. Ce temps d'attente ralentit le fonctionnement du calculateur.

Par exemple, avec le dispositif de détection et de correction distribué sous la référence 29C532E de la société MHS, une erreur simple est détectée en 34 ns et corrigée en 39 ns, et une erreur double est détectée en 37 ns. Ainsi, la fréquence de travail des calculateurs équipés de tels dispositifs est inférieure à la fréquence de travail de calculateurs dépourvus de tels dispositifs. Pour fixer des idées, on indique ici qu'avec un dispositif de détection et de correction, la fréquence de traitement est de l'ordre de 10 à 15 MHz alors qu'elle est de 20 ou 25 MHz sans un tel dispositif.

De toute façon, le temps d'attente nécessité par la détection et la correction fait plafonner la fréquence de traitement. Autrement dit, les calculateurs équipés d'un dispositif de détection et de correction ne peuvent pas profiter de l'augmentation des fréquences de traitement des processeurs.

L'invention remédie à cet inconvénient.

Selon une première disposition de l'invention, on combine au dispositif de détection et correction d'erreur simple ou multiple, un dispositif de détection d'erreur unique, tel qu'un contrôle de parité, et on prévoit des moyens pour transférer les données de la mémoire dans le microprocesseur si aucune erreur simple n'a été détectée et pour mettre le processeur en attente de correction si une erreur simple a été détectée. En d'autres termes on travail dans un premier temps que sur l'erreur simple et pas à la fois sur l'erreur simple et l'erreur double.

A cet effet le dispositif de détection d'erreur unique présente, de préférence, un temps de traitement inférieur au temps de traitement du dispositif de détection et correction nécessaire pour détecter et déterminer une erreur (simple ou double). Ainsi, le temps de transfert des données de la mémoire dans le processeur est réduit. Dans un exemple où l'on fait appel à un contrôle de parité, la détection d'erreur est réduite de 34 ns à 16 ns. En outre, quand on fait appel à un contrôle de parité, la réalisation est particulièrement simple puisque le bit de parité se trouve déjà dans le mot de contrôle mémorisé. Autrement dit, dans ce cas, il n'est pas nécessaire de prévoir, à l'écriture, d'opération supplémentaire ou de mémoire supplémentaire et la détection d'erreur simple constitue alors une simple dérivation de la mémoire du mot de contrôle.

Si le dispositif de détection et de correction d'erreur, détecte, indépendamment de la détection d'erreur unique, une erreur double alors, de façon classique, on effectue une remise à zéro du processeur, cette remise à zéro étant réalisée, selon l'invention, à postériori.

Ainsi, l'invention accélère le traitement des données, tout en tant garantissant la même qualité de détection et de correction que celle obtenue jusqu'à présent.

Dans un autre mode de réalisation, les données sont transférées sans retard de la mémoire vers le microprocesseur et le dispositif de détection et de correction d'erreur effectue une remise à zéro quand une erreur, qu'elle soit simple ou double, a été détectée.

Autrement dit, le dispositif de détection et de correction d'erreur ne ralentit pas le fonctionnement du processeur. Toutefois, cette amélioration de la vitesse de traitement est obtenue au détriment de la qualité de correction puisque, dans cette réalisation, même les erreurs simples ne sont pas corrigées.

L'invention prévoit un ensemble comprenant un processeur, une mémoire et un dispositif de protection de la mémoire qui, pour chaque mot de données transféré du processeur vers la mémoire, calcule un mot de contrôle qui est mémorisé et qui, lors du transfert du mot de données de la mémoire vers le processeur, recalcule un mot de contrôle et compare ce mot recalculé au mot de contrôle mémorisé de façon à détecter et corriger des erreurs. Ce dispositif de protection comporte, en outre, un organe effectuant une détection simplifiée d'erreur dont le temps de traitement est sensiblement inférieur au temps de détection et correction d'erreur, le signal fourni par cette détection simplifiée autorisant le transfert du mot de données de la mémoire vers le processeur en cas d'absence d'erreur détectée par cet organe, et imposant une attente en cas de détection d'erreur par cet organe.

Selon un mode de réalisation, l'organe comporte un moyen de contrôle de parité.

Selon un mode de réalisation, l'organe fait appel au bit de parité constituant une partie du mot de contrôle mémorisé grâce au dispositif de protection.

Selon un mode de réalisation, le mot de contrôle, calculé par le dispositif de protection, est établi selon un code de Hamming ou un code cyclique.

Selon un mode de réalisation, le dispositif de protection effectue une correction uniquement dans le cas où une erreur sur un seul bit est détectée.

Selon un mode de réalisation, lorsqu'une erreur sur deux bits est détectée, le dispositif de protection commande une remise à zéro de la donnée ou tâche effectuée dans le processeur.

Selon un mode de réalisation, la mémoire est interne au processeur ou microprocesseur.

La présente invention prévoit en outre une application de l'ensemble à un calculateur et à une mémoire destinés à être embarqués à bord d'un engin spatial, la mémoire étant extérieure au calculateur.

D'autres caractéristiques et avantages de l'invention apparaîtront avec la description de certains de ses modes de réalisation, celle-ci étant effectuée en se référant aux dessins ci-annexés sur lesquels :

La figure 1 est un schéma d'un ensemble connu à processeur, mémoire vive et dispositif de détection et contrôle d'erreur,
La figure 2 est un schéma montrant aussi un ensemble à processeur, mémoire vive et dispositif de détection et correction d'erreur conforme à l'invention, et
Les figures 3a à 3d sont des diagrammes montrant le fonctionnement de l'ensemble représenté sur la figure 2.

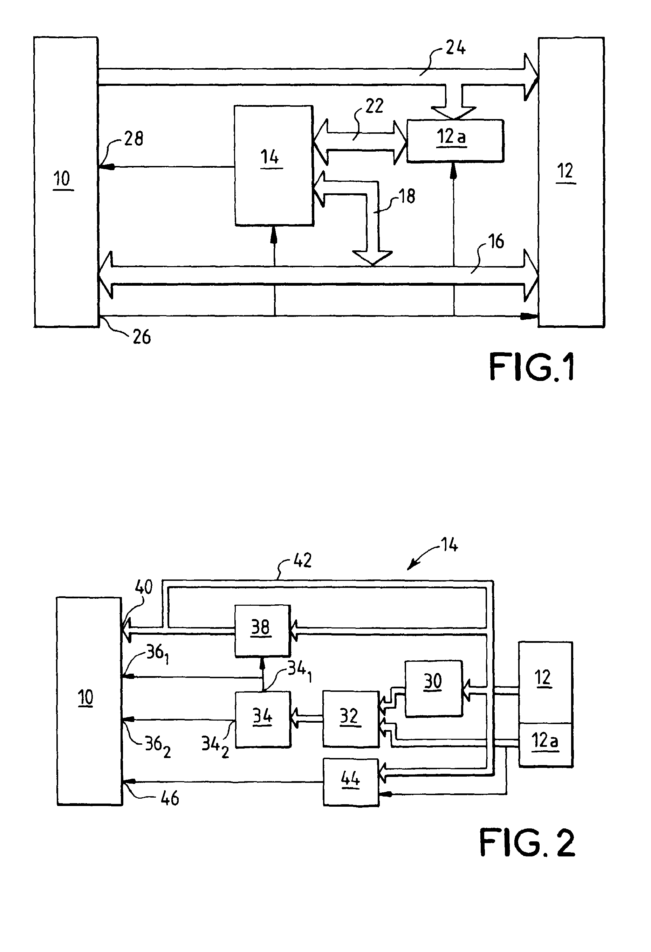

L'ensemble représenté sur la figure 1 montre l'agencement général, en soi connu, d'un processeur 10, d'une mémoire vive 12, et d'un dispositif de détection et correction d'erreur 14 interposé entre le processeur 10 et la mémoire 12. Le dispositif 14 de détection et correction d'erreur est du type "non traversant", c'est-à-dire qu'il se trouve sur une dérivation du bus de données 16 reliant le processeur 10 à la mémoire 12.

Lorsque le bus 16 envoie des données du processeur 10 vers la mémoire 12, on prévoit donc une dérivation 18 qui fournit les données au dispositif 14 et ce dernier détermine, pour chaque mot de données, par exemple de 32 bits, un mot de contrôle selon un code de Hamming ou code cyclique. Ce mot de contrôle est fourni, par l'intermédiaire d'un bus 22, à une mémoire vive 12a qui, dans l'exemple, constitue une partie de la mémoire 12. Ce mot de contrôle comporte 8 bits dont un bit de parité.

Les adresses des mots de données et des mots de contrôle dans les mémoires, respectivement 12 et 12a, sont déterminées par le processeur 10 et transmises à ces mémoires par l'intermédiaire d'un bus 24.

Les mémoires 12 et 12a, ainsi que le dispositif 14, présentent des entrées destinées à recevoir des signaux de commande du processeur 10. Ces signaux de commande sont fournis par une sortie 26 du processeur ; ils indiquent des ordres d'écriture, de lecture et les ordres de commande correspondants.

Lors du transfert de données du processeur 10 vers la mémoire 12, le dispositif 14 élabore, pour chaque mot de 32 bits par exemple, un mot de contrôle qu'il transmet, par le bus 22, à la mémoire 12a de mots de contrôle.

Lors de la lecture, c'est-à-dire quand les données de la mémoire 12 doivent être transférées dans le processeur 10, selon l'état antérieur de la technique, pour chaque mot, on calcule un mot de contrôle grâce au dispositif 14 et au bus 18, et ce mot de contrôle est comparé au mot de contrôle correspondant stocké dans la mémoire 12a. On autorise le transfert du mot complet dans le processeur 10 si la comparaison montre qu'il n'y a pas d'erreur. S'il y a une erreur sur un seul bit, on effectue une correction et le mot corrigé est chargé dans le processeur 10. Enfin, si la comparaison montre que le mot provenant de la mémoire 12 présente deux bits erronés par rapport au mot d'origine, on effectue une remise à zéro de la tâche correspondante dans le microprocesseur 10. L'ordre d'attente ou d'interruption est fourni par le dispositif 14 sur une entrée 28 du processeur 10.

Pour réduire le temps de retard introduit par la détection d'erreur, et éventuellement, sa correction, et cela sans compromettre la qualité de détection et de correction, le mode de réalisation de l'invention représenté sur la figure 2 prévoit d'effectuer une détection d'erreur simplifiée et rapide et de transférer les données de la mémoire dans le processeur 10 immédiatement après la détection simplifiée si cette dernière indique qu'il n'y a pas d'erreur simple. Si une erreur simple est détectée, on commande une attente de transfert de données dans le processeur 10 jusqu'à ce que la correction soit effectuée. Cette correction consiste, dans l'exemple, en une correction réelle si l'erreur ne porte que sur un seul bit du mot.

Dans le cas où le mot présente deux bits erronés, on n'effectue pas de correction, mais une remise à zéro de la tâche comprenant le mot erroné introduit dans le processeur 10. En effet, la détection simplifiée n'aura, en général, pas détecté une telle erreur double et l'aura donc introduite en mémoire du processeur.

Dans l'exemple, la détection simplifiée consiste en un contrôle de parité qui permet de déterminer de façon très rapide si un bit est erroné ou non. Il est d'ailleurs à noter que le bit de parité du mot d'origine se trouve dans le mot de contrôle correspondant emmagasiné dans la mémoire 12a. Ce bit de contrôle de parité indique, par exemple, la parité du nombre de "1s" du mot. Si un bit du mot à contrôler est erroné, la parité du nombre de 1s change.

Il est à noter que ce contrôle de parité ne permet pas de détecter un nombre pair de bits erronés. Mais la probabilité de présence de deux bits erronés est très faible et, de toute façon, cette situation est détectée (mais avec retard) par le dispositif 14 indiqué ci-dessus.

Le contrôle de parité est une opération bien connue. L'invention consiste à combiner ce contrôle simple avec une détection et correction d'erreur plus élaborées, notamment un code de Hamming.

Dans l'exemple représenté sur la figure 2, le dispositif 14 comporte, de façon en soi connue, un organe 30 de calcul des mots de contrôle pour les mots se trouvant dans la mémoire principale 12, ainsi qu'un organe 32 qui compare le mot de contrôle fourni par l'organe 30 avec le mot de contrôle se trouvant dans la mémoire 12a et qui, à partir de cette comparaison, indique si le mot à contrôler provenant de la mémoire principale 12 (et donc à 32 bits dans l'exemple) présente 0, 1 ou 2 erreurs. Dans le cas où une erreur simple est présente, l'organe 32 indique l'emplacement de l'erreur. Les données fournies par l'organe 32 sont communiquées à un organe de décision 34 qui présente deux sorties dont la première $34_1$ indique une erreur sur un seul bit et le signal correspondant est appliqué sur une entrée $36_1$ d'interruption du processeur 10 ainsi qu'à l'entrée d'un organe 38 de correction. La seconde sortie $34_2$ de l'organe 34 indique une erreur double qui est transmise à une entrée $36_2$ de remise à zéro du processeur 10.

La sortie de l'organe 38 de correction est connectée à l'entrée de données 40 du processeur 10. Cette entrée 40 reçoit aussi, par un bus 42, les données provenant directement de la mémoire 12 quand aucune erreur n'a été détectée dans le mot correspondant.

Selon l'invention, on prévoit un organe 44 de contrôle de parité qui calcule la parité du nombre de "1" ou de "0" de chaque mot provenant de la mémoire principale 12 et qui compare le bit de parité ainsi calculé au bit de parité se trouvant dans la mémoire 12a des mots de contrôle. Si les bits de parité ainsi comparés ont la même valeur, on applique sur une entrée 46 du processeur 10 une commande qui autorise le chargement dans le processeur 10 des données provenant de la mémoire et transmise par le bus 42 sur l'entrée 40.

Dans un exemple, si D(0), D(1), ..., D(31) sont les 32 bits du mot de données, stocké dans la mémoire 12 et si P est le bit de parité du mot initialement stocké, ce bit P étant contenu dans le mot de contrôle stocké en mémoire 12a, l'organe 44 effectue l'opération F suivante :

$$F = D(0) \oplus D(1) \oplus ... D(31) \oplus P,$$

le signe $\oplus$ représentant une opération OU-exclusif.

Si l'organe 44 indique une erreur sur un seul bit du mot stocké dans la mémoire principale 12, le signal appliqué sur l'entrée 46 du processeur 10 commande une attente du chargement jusqu'à ce que l'organe 38 ait effectué la correction.

Dans une réalisation, l'organe 44 comporte six étages du type OU-exclusif disposés en cascade, chacun nécessitant un temps de 2,2 ns pour réaliser l'opération correspondante. Dans ces conditions si, en plus, on prévoit à l'entrée et à la sortie des dispositifs interfaces conférant chacun un retard de 1,3 ns, le temps maximum de traitement dans l'organe 44 est de 16 ns. Ce temps de 16 ns représente moins de la moitié du temps (34 ns) de traitement obtenu en l'absence de la dérivation 44 conforme à l'invention.

Il est à noter que la détection d'erreur simple effectuée par l'organe 44 se distingue de la détection d'erreur simple effectuée par le reste du dispositif 14 par le fait qu'elle ne donne pas d'indication sur l'emplacement de l'erreur.

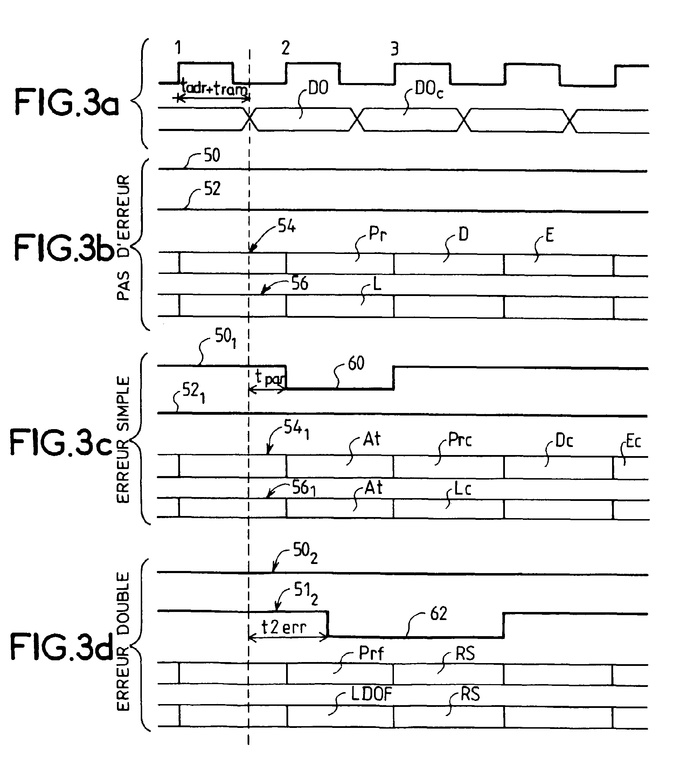

Les diagrammes des figures 3a à 3d montrent le fonctionnement du processeur et du dispositif conforme à l'invention.

La figure 3a correspond au fonctionnement du processeur. Elle comporte une première ligne montrant les cycles de fonctionnement du processeur 10. Le temps $t_{adr} + t_{ram}$ indiqué sur cette première ligne et sur les lignes suivantes correspond à la somme du temps d'établissement des adresses $t_{adr}$, soit 24 ns, et du temps d'accès à la mémoire vive 12, soit 10 ns.

La seconde ligne des diagrammes de la figure 3a représente les signaux sur le bus de données, corrigées ($D0_C$) ou non ($D0$).

Sur les diagrammes des figures 3b, 3c et 3d, on a représenté les trois cas possibles de fonctionnement, à savoir : aucune erreur, une erreur simple ou une erreur double. En outre, on a distingué à chaque fois selon que le dispositif 14 protège une zone de programme ou une zone de données du processeur 10. Dans le premier cas (protection d'un programme), le processeur, du type RISC, entreprend trois actions : prendre la donnée D0, décoder la donnée D0 et exécuter l'instruction. Chaque action est exécutée au cours d'un cycle du processeur. Dans ce cas, il faut qu'une remise à zéro soit effectuée dans un intervalle d'au plus deux cycles si l'instruction est fausse ; en effet, au bout de trois cycles, l'instruction fausse serait exécutée et, c'est précisément ce que l'on cherche à éviter.

Dans le cas où le dispositif 14 protège une zone de données, le processeur exécute une instruction qui utilise la donnée D0. Il faut alors que le processeur effectue une remise à zéro dans le délai d'un cycle.

Le diagramme de la figure 3b qui correspond, rappelons-le, à une absence d'erreur, comporte une ligne 50 indiquant une absence de détection d'erreur de parité, une ligne 52 indiquant une absence de détection d'erreur double, une ligne 54 dans laquelle on a représenté les trois actions correspondant à une instruction de programme : prendre (Pr) la donnée, décoder (D) la donnée D0, et exécuter (E) la donnée D0, et une ligne 56 qui représente le cas où la donnée est une variable. Dans ce dernier cas, pendant la durée d'un cycle, on prévoit un simple chargement L.

Dans le cas représenté sur la figure 3c, la ligne $50_1$ correspond à une détection d'erreur de parité. On voit que le signal de parité correspondant à une erreur simple apparaît au bout d'un temps $t_{par}$ suivant le temps $t_{adr} + t_{ram}$ après le début d'un cycle. Ce temps $t_{par}$ est de 16 ns dans l'exemple. Le signal 60 indiquant une erreur de parité est maintenu pendant la durée d'un cycle du processeur. La ligne $52_1$ représente une absence de détection d'erreur double.

Sur la ligne $54_1$, on a représenté l'action du processeur dans le cas où la donnée est une instruction. Dans ce cas, au cours du cycle du processeur pendant lequel apparaît le signal 60, ce dernier est en attente At (ligne $54_1$ et ligne $56_1$). A l'issue de ce cycle, la donnée D0 est corrigée et est prise en compte (Prc), décodée (Dc) et exécutée (Ec) dans le cas où la donnée est une instruction. Cette donnée est simplement chargée (Lc), ligne $56_1$, dans le cas où la dite donnée est une variable.

Quand une erreur double apparaît (deux bits sont faux), on voit sur la ligne $50_2$ de la figure 3d qu'on ne détecte pas d'erreur de parité. Par contre, le signal d'erreur double apparaît environ 37 ns après les périodes $t_{adr} + t_{ram}$.

Le signal 62 de détection d'erreur double est maintenu pendant, par exemple, deux cycles du processeur afin de permettre un reset, RS, après que le processeur a enregistré une donnée fausse, Prf, de programme ou une donnée de variable fausse $D0_f$.

Le temps $t_{adr} + t_{par}$ étant de 50 ns, la fréquence de travail est ainsi de l'ordre de 20 MHz alors qu'elle est d'environ 14 MHz dans le cas classique.

Dans une variante permettant d'accélérer encore plus le fonctionnement, on ne prévoit pas de détection rapide d'erreur mais on charge immédiatement les données dans le processeur sans attendre le résultat de la détection et on effectue une remise à zéro si une erreur est détectée. Autrement dit, dans ce cas, le fonctionnement peut être encore plus rapide que dans le cas précédent mais au prix d'une absence de correction quand une seule erreur est détectée.

L'invention s'applique non seulement dans le cas où la mémoire 12 est externe au processeur 10 mais également dans le cas où la mémoire est interne. La mémoire 12 est par exemple, une mémoire cache d'un microprocesseur.

**Revendications**

1. Ensemble comprenant un processeur (10), une mémoire (12) et un dispositif de protection (14) de la mémoire qui, pour chaque mot de données transféré du processeur (10) vers la mémoire (12), calcule un mot de contrôle qui est mémorisé (12a) et qui, lors du transfert du mot de données de la mémoire vers le processeur, recalcule un mot de contrôle et compare (32) ce mot recalculé au mot de contrôle mémorisé de façon à détecter et corriger des erreurs simples ou multiples, caractérisé en ce que le dispositif (14) de protection comporte, en outre, un organe (44) effectuant une détection simplifiée d'erreur simple dont le temps de traitement est sensiblement inférieur au temps de détection et de détermination d'erreurs simples ou multiples, le signal fourni par cette détection simplifiée autorisant le transfert du mot de données de la mémoire vers le processeur en cas d'absence d'erreur simple détectée par cet organe, et imposant une attente en cas de détection d'erreur simple par cet organe.

2. Ensemble selon la revendication 1, caractérisé en ce que l'organe (44) comporte un moyen de contrôle de parité.

3. Ensemble selon la revendication 2, caractérisé en ce que l'organe (44) fait appel au bit de parité constituant une partie du mot de contrôle mémorisé grâce au dispositif de protection (14).

**4.** Ensemble selon l'une quelconque des revendications précédentes, caractérisé en ce que le mot de contrôle, calculé par le dispositif de protection (14), est établi selon un code de Hamming ou un code cyclique.

**5.** Ensemble selon l'une quelconque des revendications précédentes, caractérisé en ce que le dispositif de protection (14) effectue une correction uniquement dans le cas où une erreur sur un seul bit est détectée.

**6.** Ensemble selon l'une quelconque des revendications précédentes, caractérisé en ce que lorsqu'une erreur sur deux bits est détectée, le dispositif de protection (14) commande une remise à zéro de la donnée ou tâche effectuée dans le processeur, la détection d'erreur sur deux bits étant effectuée indépendamment de la détection simplifiée.

**7.** Ensemble selon l'une quelconque des revendications 1 à 6, caractérisé en ce que la mémoire est interne au processeur ou microprocesseur.

**8.** Application de l'ensemble selon l'une quelconque des revendications précédentes à un calculateur et à une mémoire destinés à être embarqués à bord d'un engin spatial, la mémoire étant extérieure au calculateur.

FIG.1

FIG.2

FIG.3a

FIG.3b

FIG.3c

FIG.3d

Office européen
des brevets

**RAPPORT DE RECHERCHE EUROPEENNE**

Numéro de la demande

EP 00 40 1312

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | PATENT ABSTRACTS OF JAPAN<br>vol. 4, no. 78 (P-014),<br>6 juin 1980 (1980-06-06)<br>& JP 55 043658 A (HITACHI LTD)<br>* abrégé *<br>--- | 1,2,4 | G06F11/10 |
| A | US 4 646 312 A (GOLDSBURY ET AL.)<br>24 février 1987 (1987-02-24)<br>* le document en entier *<br>--- | 1 | |
| A | US 5 771 247 A (ALLEN ET AL.)<br>23 juin 1998 (1998-06-23)<br>----- | | |

| DOMAINES TECHNIQUES RECHERCHES (Int.Cl.7) |
|---|
| G06F<br>H03M |

Le présent rapport a été établi pour toutes les revendications

| Lieu de la recherche | Date d'achèvement de la recherche | Examinateur |
|---|---|---|
| LA HAYE | 30 juin 2000 | Absalom, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 1312

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-06-2000

| Document brevet cité au rapport de recherche | | Date de publication | Membre(s) de la famille de brevet(s) | | Date de publication |
|---|---|---|---|---|---|
| JP 55043658 | A | 27-03-1980 | JP 1342393 C | | 14-10-1986 |
| | | | JP 60052451 B | | 19-11-1985 |
| US 4646312 | A | 24-02-1987 | CA 1240065 A | | 02-08-1988 |
| | | | DE 3576260 D | | 05-04-1990 |
| | | | EP 0204832 A | | 17-12-1986 |
| | | | JP 62501047 T | | 23-04-1987 |
| | | | WO 8603634 A | | 19-06-1986 |
| US 5771247 | A | 23-06-1998 | AUCUN | | |

EPO FORM P0460

Pour tout renseignement concernant cette annexe : voir Journal Officiel de l'Office européen des brevets, No.12/82